# EUROPÄISCHE PATENTANMELDUNG

(11) **EP 1 747 915 A2**
(43) Veröffentlichungstag der Anmeldung: **31.01.2007**
(21) Anmeldenummer: 06014788.1
(22) Anmeldetag: 15.07.2006
(51) Int. Cl.: B60C 27/08

(54) **Ringförmiges Horizontalglied zum Verbinden von Vertikalgliedern einer Reifenkette und Methode zur Fertigung einer Reifenkette**

(30) Priorität: 28.07.2005 DE 102005036720
(71) Anmelder: Eisen- und Drahtwerk Erlau AG, 73431 Aalen (DE)
(72) Erfinder: Dr. Rieger, Hansjörg, 73431 Aalen (DE); Rieger, Johannes Werner, 73431 Aalen (DE); Bogdan, Zvonimir, 73453 Abtsgmünd (DE)
(74) Vertreter: Jackisch-Kohl, Anna-Katharina

(57) **Zusammenfassung**

Reifenketten haben Ringglieder (2, 3), in die Stegglieder (1) eingehängt sind. Die Kippbelastung der Stegglieder (1) beim Überrollen durch den Reifen hängt unter anderem davon ab, unter welchem Winkel zur Kettenlängsrichtung sie innerhalb der Reifenkette angeordnet sind. Damit das Ringglied (2, 3) und das Verfahren eine einfache Fertigung bei geringer Belastbarkeit der Kettenglieder gewährleistet, ist der Ringkörper (25) des Ringgliedes (2, 3) an seiner Außenseite mit wenigstens einer von der Kreisform abweichenden Abflachung (34, 40) versehen. Das Ringglied (2, 3) kann abgebogene Enden (36, 37) aufweisen, auf die ein Verschlußteil (38) aufgeschoben wird. Es ist quer zur Längsrichtung der Ringkörperenden (36, 37) teilweise offen. Dadurch kann das Verschlußteil (38) auf den Ringkörperenden (36, 37) von der Seite aus angeschweißt werden. Die Ringglieder (2, 3) sowie die Reifenkette werden vorteilhaft für einen Reifenschutz eingesetzt, insbesondere beim Einsatz in Steinbrüchen, Bergwerken und dergleichen.

## Beschreibung

Die Erfindung betrifft ein Ringglied für eine Reifenkette, insbesondere eine Reifenschutzkette, nach dem Oberbegriff des Anspruches 1 sowie ein Verfahren zur Herstellung einer Reifenkette nach dem Oberbegriff des Anspruches 20.

Es sind Ringglieder für Reifenketten bekannt, deren Ringkörper stetig gekrümmt ist. In die Ringglieder werden in der Regel Stegglieder eingehängt, die für die Griffigkeit der Reifenkette sorgen. Die Kippbelastung der Stegglieder hängt u.a. davon ab, unter welchem Winkel zur Kettenlängsrichtung sie innerhalb der Reifenkette angeordnet sind.

Der Erfindung liegt die Aufgabe zugrunde, das gattungsgemäße Ringglied sowie das gattungsgemäße Verfahren so auszubilden, daß eine einfache Fertigung möglich ist und dabei eine geringe Belastbarkeit der Kettenglieder gewährleistet ist.

Diese Aufgabe wird beim gattungsgemäßen Ringglied erfindungsgemäß mit den kennzeichnenden Merkmalen des Anspruches 1 und beim gattungsgemäßen Verfahren erfindungsgemäß mit den kennzeichnenden Merkmalen des Anspruches 20 gelöst.

Beim erfindungsgemäßen Ringglied ist der Ringkörper an seiner Außenseite mit einer von der Kreisform abweichenden Formgebung versehen. Diese abweichende Formgebung wird im folgenden als Abflachung bezeichnet. Die abweichende Formgebung kann eben verlaufen, kann jedoch auch einen abweichenden, insbesondere einen wesentlich größeren Krümmungsradius aufweisen als der restliche Teil des Ringkörpers. Diese Formgebung des Ringkörpers hat zur Folge, daß innerhalb eines Kettenverbandes die in das Ringglied eingehängten Stegglieder wesentlich steiler in Kettenlängsrichtung bei gespannter Reifenkette angestellt werden können. So kann beispielsweise der Winkel zwischen den Längsachsen benachbarter, in dasselbe Ringglied eingehängter Stegglieder kleiner als 60° sein, vorzugsweise bei etwa 50° liegen. Die Stegglieder nehmen dann innerhalb der Reifenkette eine optimale Lage hinsichtlich der auf sie wirkenden Kippbelastung ein. Aufgrund der abweichenden Formgebung des Ringkörpers können quer zur Kettenlängsrichtung benachbarte Ringglieder einen kleineren Abstand haben als Ringglieder, deren Ringkörper einen konstanten Radius hat. Aufgrund dieses kleineren Abstandes der Ringglieder voneinander kann der Anstellwinkel der Stegglieder klein sein. Aufgrund dieses kleinen Anstellwinkels wird auch die Kippbelastung auf die Stegglieder klein. Dadurch wird die Gefahr einer Beschädigung der Stegglieder im rauhen Einsatz von Reifenschutzketten verringert. Soll die Greifwirkung erhöht werden, können die Stegglieder mit entsprechenden Profilierungen auf ihrer Verschleißseite versehen sein.

Das Ringglied kann einen geschlossenen Ringkörper haben. Es ist aber auch möglich, das Ringglied so auszubilden, daß der Ringkörper nach außen abgebogene Enden aufweist, die eine Einführöffnung für einzuhängende Kettenglieder begrenzen und auf denen ein Verschlußteil zum Schließen der Einführöffnung befestigt wird.

Bei einer weiteren erfindungsgemäßen Ausbildung ist das Verschlußteil quer zur Längsrichtung der Ringkörperenden teilweise offen. Dadurch ist es möglich, das Verschlußteil auf den Ringkörperenden zu verschweißen, ohne daß das Verschlußteil für den Verschweißvorgang in eine besondere, insbesondere aufrechte Lage gebracht werden muß. Bei bekannten Ringgliedern ist die Verschweißung der Ringkörperenden nur von der Stirnseite des Verschlußteiles aus möglich. Darum muß das Verschlußteil bei der Herstellung der Reifenkette zunächst in eine aufrechte Lage gebracht werden, damit die Verschweißung stattfinden kann. Beim erfindungsgemäßen Ringglied ist das Verschlußteil jedoch seitlich offen, so daß eine Verschweißung der Ringkörperenden am Verschlußteil von der Seite aus möglich ist.

Bei einer weiteren erfindungsgemäßen Ausbildung sind die Ringkörperenden im Verschlußteil nicht über ihren gesamten Umfang über die Schweißnaht mit dem Verschlußteil verbunden. Dadurch ist es möglich, die Verschweißung der Ringkörperenden im Verschlußteil nur von einer Seite aus durchzuführen. Das Verschlußteil muß dann nicht gewendet werden, wodurch der Zusammenbau der Reifenkette wesentlich erleichtert wird.

Bei der erfindungsgemäßen Reifenkette sind die Ringglieder innerhalb des Kettenverbandes so angeordnet, daß ihre Abflachungen in Kettenlängsrichtung verlaufen. Die in die Ringglieder eingehängten Stegglieder können dann bei gespannter Kette ihre optimale Lage einnehmen.

Beim erfindungsgemäßen Verfahren wird an das Verschlußteil quer zu dessen die Vertiefung aufweisender Seite das Schweißgerät angesetzt, das bei liegendem Ringglied die Ringkörperenden in der Vertiefung mit dem Verschlußteil verschweißt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: einen Teil einer Reifenschutzkette mit erfindungsgemäßen Kettengliedern im Neuzustand,
- Fig. 2: in einer Darstellung entsprechend Fig. 1 die Reifenschutzkette nach einer gewissen Einsatzdauer,
- Fig. 2a: in vergrößerter Darstellung einen Teil der Reifenschutzkette gemäß Fig. 2,
- Fig. 3: die Reifenschutzkette gemäß Fig. 1, deren Kettenglieder eine Endstellung nach größerem Verschleiß einnehmen,
- Fig. 4: in perspektivischer Darstellung vier Stegglieder, die in ein erfindungsgemäßes Ringglied eingehängt sind,
- Fig. 5: einen Schnitt durch einen Teil des erfindungsgemäßen Ringgliedes und eines Steggliedes des Kettenverbandes gemäß Fig. 4,
- Fig. 6: in perspektivischer Darstellung den Kettenverband gemäß Fig. 4,
- Fig. 7: einen weiteren Schnitt durch einen Teil des erfindungsgemäßen Ringgliedes und eines Steggliedes des Kettenverbandes gemäß Fig. 4,
- Fig. 8: in vergrößerter Darstellung einen Ausschnitt aus Fig. 7.

Die Reifenschutzkette dient zum Schutz der Reifen und hat Stegglieder 1, die in Ringglieder 2, 3 eingehängt sind. Die Stegglieder 1 stehen senkrecht auf der Reifenfläche und verbinden benachbarte Ringglieder 2, 3 miteinander. Beim dargestellten Ausführungsbeispiel greifen in jedes Ringglied 2, 3 vier Stegglieder 1 ein.

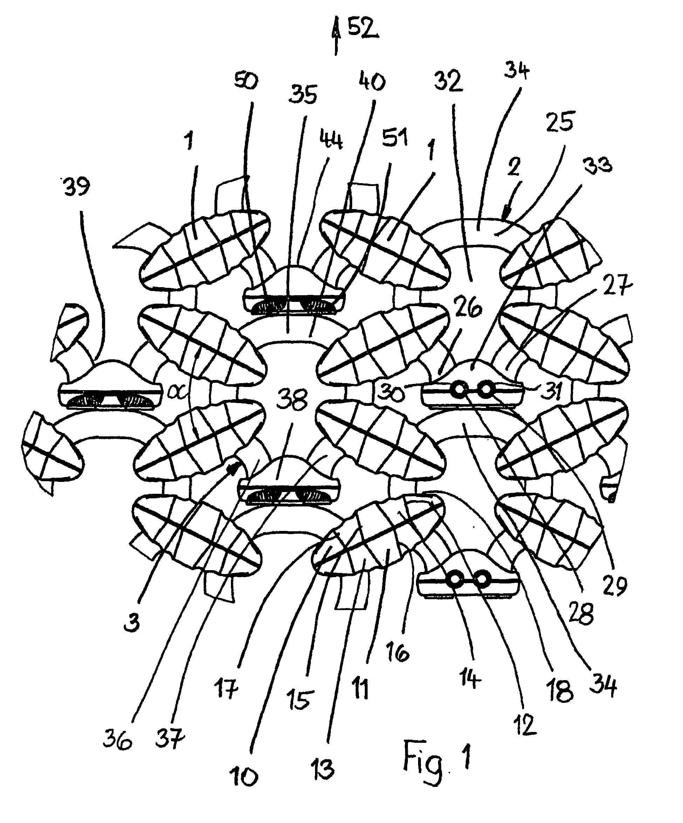

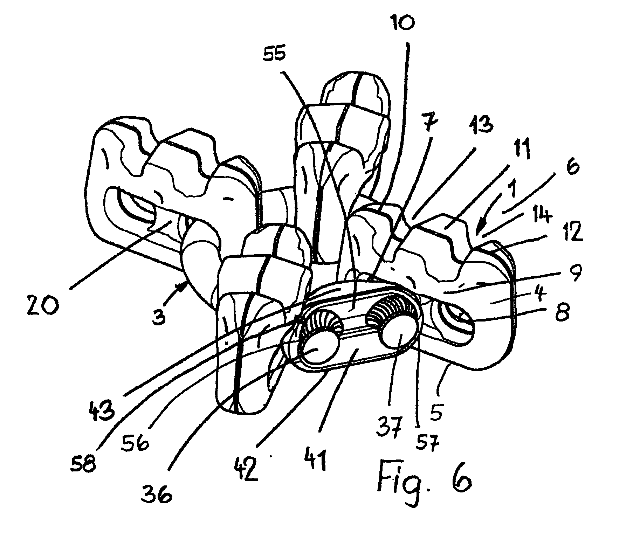

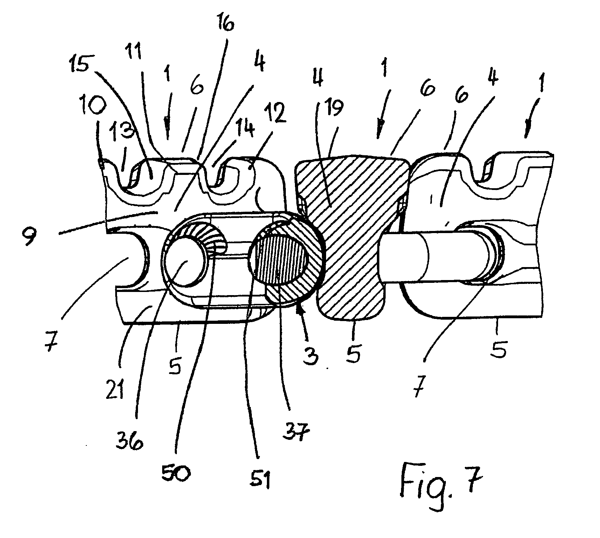

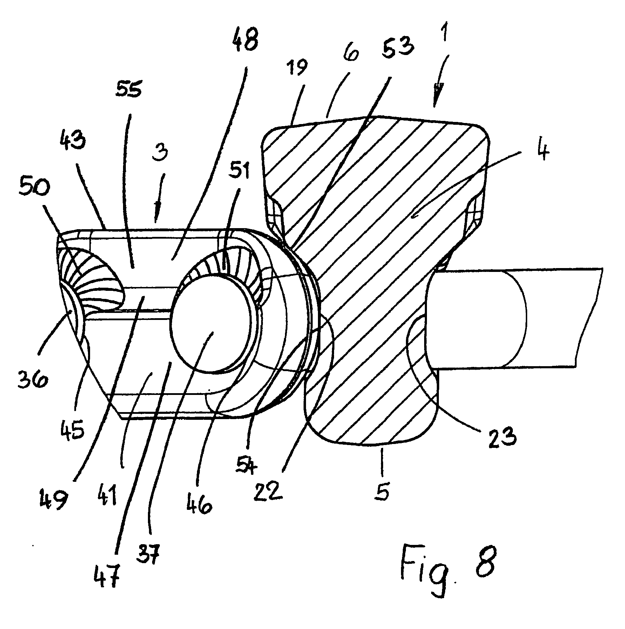

Die Stegglieder 1 sind gleich ausgebildet und haben einen Grundkörper 4 (Fig. 6 bis 8), der eine Reifenanlagefläche 5 und eine gegenüberliegende Verschleißseite 6 aufweist. Der Grundkörper 4 wird von zwei Einhängeöffnungen 7 und 8 durchsetzt, durch welche die Ringglieder 2, 3 ragen. Die Einhängeöffnungen 7, 8 haben kleineren Abstand zur Reifenanlagefläche 5 als zur Verschleißseite 6. Dadurch steht ein ausreichend großes Verschleißvolumen für die Stegglieder 1 zur Verfügung. Der die Verschleißseite 6 aufweisende Gliedkörperteil 9 verbreitert sich von den Enden des Steggliedes aus so, daß er in halber Länge seine größte Breite hat. In Draufsicht auf die Verschleißseite 6 gesehen (Fig. 1) hat das Stegglied 1 dadurch etwa rautenförmigen Umriß. Die Reifenanlagefläche 5 ist zur Reifenschonung im Querschnitt abgerundet (Fig. 7 und 8).

Zur Erhöhung der Griffigkeit hat das Stegglied 1 an seiner Verschleißseite 6 drei Vorsprünge 10 bis 12, die durch Vertiefungen 13, 14 voneinander getrennt sind. Die Vertiefungen 13, 14 erstrecken sich über die gesamte Breite des Gliedkörperteiles 9.

Wie sich aus den Fig. 1, 2a und 7 ergibt, wird der mittlere Vorsprung 11 von dachförmig gestalteten Seitenflächen 15 und 16 begrenzt, die die eine Seitenwand der Vertiefungen 13, 14 bilden. Die endseitigen Vorsprünge 10 und 12 sind spiegelbildlich zueinander ausgebildet und haben ebenfalls jeweils eine dachförmig bzw. V-förmig ausgebildete Seitenfläche 17, 18. Sie bilden zusammen mit den gegenüberliegenden Seitenflächen 15, 16 die Seitenwände der Vertiefungen 13, 14. Die Seitenflächen 17, 18 der endseitigen Vorsprünge 10, 12 sind in Richtung auf den mittleren Vorsprung 11 gerichtet, während die V-förmig verlaufenden Seitenflächen 15, 16 des mittleren Vorsprunges 11 gegen die endseitigen Vorsprünge 10, 12 gerichtet sind. Aufgrund der V-förmig gestalteten Seitenflächen 15 bis 18 erweitern sich die Vertiefungen 13, 14 von der halben Breite des Steggliedes 1 aus jeweils nach außen. Dies trägt dazu bei, daß im Einsatz der Reifenschutzkette in den Vertiefungen 13, 14 keine Steine und dergleichen hängenbleiben, welche die Griffigkeit der Stegglieder 1 beeinträchtigen würden.

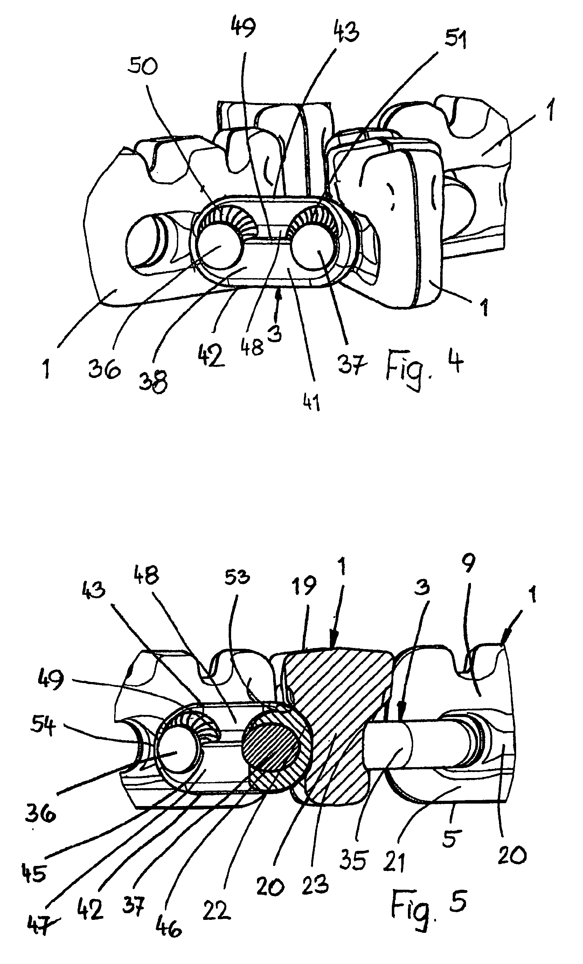

Wie sich aus den Fig. 5, 7 und 8 ergibt, ist die Stirnseite 19 der Vorsprünge 10 bis 12 im Querschnitt V-förmig ausgebildet, so daß die Vorsprünge in halber Breite des Steggliedes ihre größte Höhe haben. Diese Ausbildung trägt zur optimalen Griffigkeit der Stegglieder 1 bei.

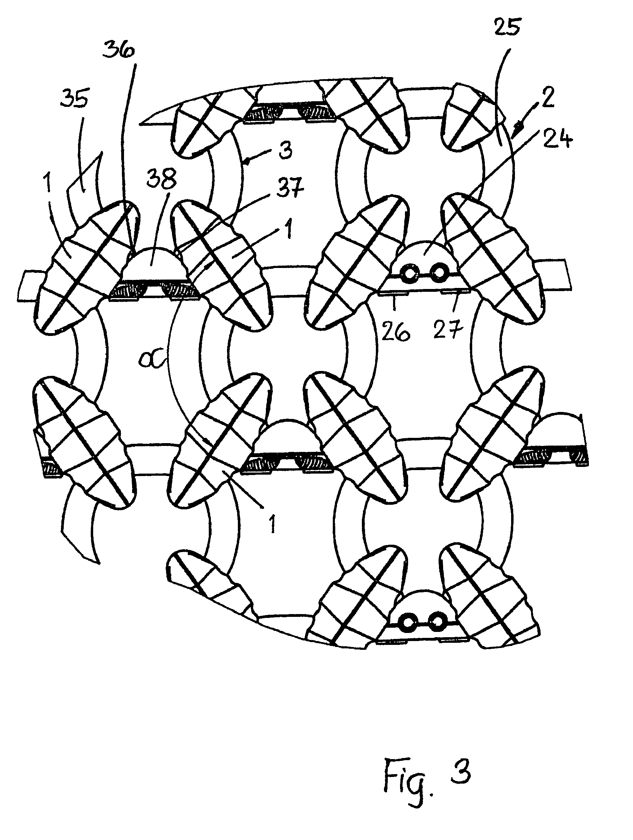

Die beiden Einhängeöffnungen 7, 8 des Steggliedes 1 sind durch einen Steg 20 voneinander getrennt, der den die Reifenanlagefläche 5 aufweisenden Gliedkörperteil 21 mit dem die Verschleißseite 6 bzw. die Vorsprünge 10 bis 12 aufweisenden Gliedkörperteil 9 verbindet (Fig. 5). Die Seitenflächen 22, 23 des Steges 20 sind im Querschnitt nach innen gekrümmt verlaufend ausgebildet (Fig. 5 und 8). Außerdem sind die Seitenflächen 22, 23 des Steges 20 in Längsrichtung des Steggliedes 1 ebenfalls gebogen ausgebildet. Diese Gestaltung des Steges 20 hat den Vorteil, daß in einer Extremlage der Kettenglieder (Fig. 3 und 8) die Ringglieder 2, 3 in noch zu beschreibender Weise im wesentlichen flächig an den Seitenflächen 22, 23 des Steges 20 der Stegglieder 1 anliegen. Diese Anlagesituation ist beispielhaft in den Fig. 3, 5 und 8 dargestellt.

Die Reifenschutzkette kann selbstverständlich auch anders gestaltete Stegglieder 1 aufweisen. Die dargestellte und beschriebene Ausführungsform der Stegglieder 1 ist nur beispielhaft zu verstehen. Dabei können innerhalb der Reifenschutzkette durchaus auch unterschiedlich gestaltete Stegglieder 1 vorgesehen sein.

Auch die Ringglieder 2 innerhalb der Reifenschutzkette sind nur beispielhaft in der dargestellten Ausführung ausgebildet. Die Ringglieder 2 können auch kreisrunde Ringglieder sein, die auch mit den Ringgliedern 2 gemäß den Zeichnungen im Verbund innerhalb der Reifenschutzkette vorgesehen sein können. Die in den Fig. 1 bis 8 dargestellten Ringglieder 2 haben einen Vorteil gegenüber kreisrunden Ringgliedern, wenn nach längerem Einsatz der Reifenschutzkette die Kettenglieder einen entsprechenden Verschleiß aufweisen und eine Lage zueinander einnehmen, wie sie in Fig. 3 dargestellt ist. In dieser Lage liegen die Stegglieder 1 an Verschlußteilen 24 der Ringglieder 2 an.

Die Ringglieder 2 haben einen offenen Ringkörper 25, dessen Enden 26, 27 parallel zueinander nach außen abgebogen sind. Auf diese gerade verlaufenden Enden 26, 27 wird das Verschlußteil 24 aufgesetzt, das zwei (nicht dargestellte) Durchtrittsöffnungen für die Enden 26, 27 aufweist. Zur Lagesicherung des Verschlußteiles 24 auf den Ringkörperenden 26, 27 dienen zwei Spannstifte 28, 29, die in entsprechende Öffnungen 30, 31 des Verschlußteiles 24 eingesetzt sind. Die Ringkörperenden 26, 27 sind auf ihren einander zugewandten Seiten mit (nicht dargestellten) teilkreisförmigen Vertiefungen versehen, in welche die Spannstifte 28, 29 eingreifen. Auf diese Weise ist das Verschlußteil 24 auf den Ringkörperenden 26, 27 formschlüssig gesichert. Das Verschlußteil 24 hat einen mittleren, in Richtung auf die Ringöffnung 32 vorstehenden Vorsprung 33, dessen Stirnseite bogenförmig gekrümmt verläuft. Der Vorsprung 33 ragt so weit in Richtung auf die Ringöffnung 32 vor, daß er etwa in Höhe des Überganges der geraden Ringkörperenden 26, 27 in den bogenförmigen Teil des Ringkörpers 25 liegt.

Der dem Verschlußteil 24 gegenüberliegende Bereich 34 des Ringkörpers 25 ist abgeflacht, so daß er gerade verläuft.

Die Ringglieder 3 haben ebenfalls einen offenen Ringkörper 35, dessen Enden 36, 37 parallel zueinander nach außen abgebogen sind. Auf den geraden Ringkörperenden 36, 37 ist ein Verschlußteil 38 befestigt, mit dem die Einführöffnung 39 (Fig. 1) zwischen den Ringkörperenden 36, 37 verschlossen wird.

Der Ringkörper 35 hat vorteilhaft runden Querschnitt und ist an seiner dem Verschlußteil 38 gegenüberliegenden Seite mit einer Abflachung 40 versehen. In diesem Bereich verläuft der Ringkörper 35 gerade, in Achsrichtung des Ringgliedes 3 gesehen (Fig. 1).

Die Abflachung 40 kann - wie auch die Abflachung 34 - nur an der dem benachbarten Ringglied 2,3 zugewandten Außenseite des Ringkörpers 25, 35 vorgesehen sein. Die Innenseite des Ringkörpers 25, 35 kann konstanten Radius haben. Im dargestellten Ausführungsbeispiel wird die Abflachung 34, 40 durch einen entsprechend verformten Abschnitt des Ringkörpers 25, 35 gebildet. Unter Abflachung ist nicht nur eine ebene Ausbildung zu verstehen, sondern auch ein Abschnitt, der beispielsweise einen wesentlich größeren Krümmungsradius hat als der restliche Teil des Ringkörpers 25, 35.

Das Verschlußteil 38 hat einen Grundkörper 41 (Fig. 4 und 6), der zueinander parallele Längsseiten 42 und 43 aufweist, die gekrümmt ineinander übergehen. Die beiden Längsseiten 42, 43 haben, in Achsrichtung des Ringgliedes 3 gesehen, eine glockenförmig verlaufende Stirnseite 44 (Fig. 1). In halber Länge hat das Verschlußteil 38 somit seine größte Höhe.

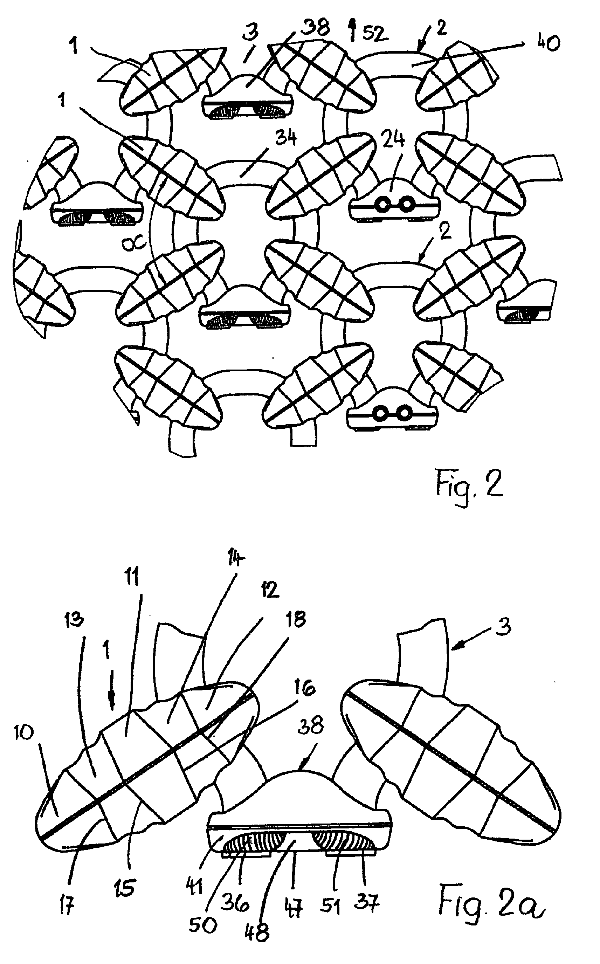

Das Verschlußteil 38 ist mit zwei Durchtrittsöffnungen 45 und 46 versehen (Fig. 5 und 8), durch welche die Ringkörperenden 36, 37 ragen. Wie sich aus den Zeichnungen ergibt, stehen die Ringkörperenden 36, 37 geringfügig über die Stirnseite 47 des Verschlußteiles 38 vor (Fig. 2a). Sie können aber auch mit ihren Stirnseiten in der Stirnseite 47 des Verschlußteiles 38 liegen.

In der ebenen Stirnseite 47 befindet sich eine Vertiefung 48, die sich über die halbe Breite des Verschlußteiles 38 sowie über dessen Länge erstreckt. Die Vertiefung 48 ist zur Längsseite 43 offen und erstreckt sich bis etwa zum halben Durchmesser der Durchstecköffnungen 45, 46 (Fig. 5 und 8). Die Vertiefung 48 wird an der der Längsseite 43 gegenüberliegenden Seite durch eine Stirnwand 49 begrenzt, die senkrecht an die Stirnseite 47 des Verschlußteiles 38 anschließt.

Das Verschlußteil 38 wird auf den Ringkörperenden 36, 37 mittels Schweißen befestigt. Das Verschlußteil 38 wird auf die Ringkörperenden 36, 37 aufgesteckt. Anschließend wird mit einem Schweißgerät von der Längsseite 43 aus die Schweißnaht 50, 51 angebracht. Wie Fig. 4 zeigt, erstreckt sich die Schweißnaht 50, 51 etwa über den halben Umfang der Ringkörperenden 36, 37. Die Schweißnähte 50, 51 erstrecken sich von der Stirnwand 49 bis zum Boden 55 sowie seitlich bis zu den voneinander abgewandten Außenseiten 56, 57 der Ringkörperenden 36, 37 (Fig. 6). Im Bereich der Außenseiten 56, 57 werden die Ringkörperenden 36, 37 mit geringem Abstand von einer Wand 58 umgeben, die sich bis in Höhe der Stirnwand 49 der Vertiefung 48 erstreckt. Die Wand 58 wird durch die Schweißnähte 50, 51 optimal abgestützt. Obwohl die Schweißnähte 50, 51 nicht über den gesamten Umfang der Ringkörperenden 36, 37 vorgesehen sind, sitzt das Verschlußteil 38 sicher auf den Ringkörperenden 36, 37. Wie aus Fig. 4 hervorgeht, können die Schweißnähte 50, 51 ausreichend dick sein. Die Schweißnähte erstrekken sich bis zur ebenen Stirnwand 49 der Vertiefung 48. Da die Vertiefung 48 zur Seitenfläche 43 offen ist, können die Schweißnähte sehr einfach angebracht werden. Insbesondere kann der Schweißvorgang bei liegendem Ringglied 3 durchgeführt werden. Dadurch ist eine einfache und schnelle Montage der Reifenschutzkette möglich. Der Schweißvorgang kann beispielsweise mittels eines Schweißroboters automatisch durchgeführt werden. In der Einbaulage sind die Schweißnähte 50, 51 gegen den Reifen durch die Längsseite 42 abgedeckt.

Fig. 1 zeigt die Reifenschutzkette im Neuzustand. Die Kettenglieder 1 bis 3 sind noch nicht im Einsatz gewesen. Die Reifenschutzkette ist so in ihrer Längsrichtung 52 gespannt, daß die Längsachsen benachbarter, in ein gemeinsames Ringglied 2, 3 eingehängter Stegglieder 1 einen Winkel α von etwa 50° einschließen. Diese Winkelstellung wird erreicht, wenn die Reifenschutzkette im Neuzustand ist und so stark in Längsrichtung 52 gespannt wird, daß die nebeneinander liegenden Ringglieder 2, 3 einander berühren oder nahezu berühren. Um in dieser Stellung eine unzulässig hohe Belastung der Ringglieder 2, 3 zu vermeiden, sind sie mit den abgeflachten Bereichen 34, 40 versehen, an denen die Verschlußteile 24, 38 mit ihren Stirnseiten anliegen. Die Ringkörperbereiche 34, 40 können hierbei an ihrer Außenseite abgeflacht sein, so daß sie an den Stirnseiten der Verschlußteile flächig anliegen. Die Stegglieder 1 haben in diesem Zustand der Reifenschutzkette Abstand voneinander. Aufgrund der abgeflachten Bereiche 34, 40 der Ringglieder 2, 3 können die Stegglieder 1 einen verhältnismäßig kleinen Anstellwinkel α haben, so daß die Stegglieder 1 zur Kettenlängsrichtung nur einen verhältnismäßig kleinen Winkel haben. Dadurch wird die auf die Stegglieder 1 wirkende Kippbelastung vermindert. Die Stegglieder 1 müssen an ihrer Verschleißseite 6 nicht unbedingt die beschriebene Profilierung in Form der Vorsprünge 10 bis 12 haben. Die Profilierung der beschriebenen Stegglieder 1 erhöht in vorteilhafter Weise die Greifwirkung erheblich.

Beim Einsatz der Reifenschutzkette verschleißen die Kettenglieder 1 bis 3. Dies hat zur Folge, daß der Winkel α zwischen den benachbarten Steggliedern 1 größer wird. In Fig. 2 beträgt dieser Winkel α beispielhaft etwa 70°. Die einander benachbarten Ringglieder 2, 3 haben nunmehr Abstand voneinander, d.h. die Verschlußteile 24, 38 liegen nicht mehr an den abgeflachten Abschnitten 34, 40 der jeweils benachbarten Ringglieder 2, 3 an. Der Anstellwinkel der Stegglieder 1 ist noch ausreichend gering.

Fig. 3 zeigt die Reifenschutzkette in einer Lage, in der die Stegglieder 1 an den Verschlußteilen 24, 38 der Ringglieder 2, 3 anliegen. Dies ist eine Folge des zunehmenden Verschleißes der Kettenglieder 1 bis 3. Die Längsachsen der benachbarten Stegglieder 1 schließen einen Winkel α ein, der größer als 100° ist. Um eine Beschädigung der Kettenglieder 1 bis 3 zu vermeiden, muß die Reifenschutzkette in diesem Zustand nachgespannt werden, um zumindest die Kettengliederlage gemäß Fig. 2 zu erhalten.

Die Verschlußteile 24, 38 sind in ihrer Umrißform im wesentlichen gleich ausgebildet. Ihre Längsseiten 42, 43 gehen bogenförmig ineinander über. Dieser bogenförmige Übergang ist auf die Seitenflächen 22, 23 des Steges 20 zwischen den Einhängeöffnungen 7, 8 (Fig. 5) so abgestimmt, daß die Ringglieder 1 mit den entsprechenden Seitenflächen 22, 23 ihrer Stege 20 im wesentlichen flächig an den gebogenen Übergangsabschnitten 53, 54 (Fig. 5 und 8) zwischen den Längsseiten 42, 43 der Verschlußteile 24, 38 anliegen. Auf diese Weise werden die Ringglieder 2, 3, wie aus Fig. 3 hervorgeht, mittels der an ihren Verschlußteilen 24, 38 anliegenden Stegglieder 1 zentriert. Dadurch werden die auf die Ringglieder 2, 3 wirkenden Belastungen minimiert. Aufgrund dieser Anlage der Stegglieder 1 an den Verschlußteilen 24, 38 gelangen die Stegglieder mit ihren in dieses Ringglied 2, 3 ragenden Teilen nicht in den Bereich des Überganges vom Ringkörper 25, 35 zu den abgebogenen Enden 26, 27; 36, 37.

Die beschriebenen Ringglieder 2 ermöglichen infolge ihrer einseitig offenen Vertiefung 48 im Verschlußteil 38 eine einseitig schweißbare Ausführung. Während der Herstellung der Reifenschutzkette muß das Ringglied 3 bzw. die Kette für den Schweißvorgang nicht mehr gedreht werden. Nach der Endmontage der Reifenschutzkette mit den beschriebenen Kettengliedern 1 bis 3 ist eine abschließende Wärmebehandlung nicht mehr erforderlich. Die Kettenglieder 1 bis 3 sind bereits vor der Endmontage fertig bearbeitet und wärmebehandelt. Dadurch ist eine kostengünstige und einfache Herstellung der Reifenschutzkette möglich. Da die Ringglieder 2, 3 die Abflachungen 34, 40 haben, lassen sich die Stegglieder 1 für eine geringe Kippbelastung in eine optimale Lage bringen. Die Abflachung läßt sich am Ringglied 2, 3 problemlos anbringen und erfordert keine aufwendige und teure Fertigung dieser Ringglieder.

Die Ringglieder 2, 3 sind im Kettenverband vorteilhaft so angeordnet, daß die Verschlußteile 24, 38 quer zur Kettenlängsrichtung 52 liegen.

Die Reifenschutzkette kann abweichend vom dargestellten Ausführungsbeispiel zu den Steggliedern 1 auch nur die Ringglieder 3 aufweisen. Da bei ihnen das Verschlußteil 38 an den Ringkörperenden 36, 37 angeschweißt ist, besteht nicht die Gefahr, daß sich das Verschlußteil vom Ringkörper unbeabsichtigt löst.

## Patentansprüche

1. Ringglied für eine Reifenkette, insbesondere eine Reifenschutzkette, mit einem Ringkörper,
**dadurch gekennzeichnet, daß** der Ringkörper (25, 35) an seiner Außenseite wenigstens eine von der Kreisform abweichende Abflachung (34, 40) aufweist.

2. Ringglied nach Anspruch 1,
**dadurch gekennzeichnet, daß** die Abflachung (34, 40) eben verläuft.

3. Ringglied nach Anspruch 1 oder 2,
**dadurch gekennzeichnet, daß** die Abflachung (34, 40) durch einen verformten Abschnitt des Ringkörpers (25, 35) gebildet ist.

4. Ringglied nach einem der Ansprüche 1 bis 3,
**dadurch gekennzeichnet, daß** der Ringkörper (25, 35) abgebogene, eine Einführöffnung (39) begrenzende Enden (26, 27; 36, 37) aufweist, denen gegenüberliegend die Abflachung (34, 40) vorgesehen ist.

5. Ringglied nach Anspruch 4,
**dadurch gekennzeichnet, daß** die Länge der Abflachung (34, 40) höchstens der Länge eines Verschlußteiles (24, 38) entspricht, das auf den Ringkörperenden (26, 27; 36, 37) sitzt.

6. Ringglied nach Anspruch 5,
**dadurch gekennzeichnet, daß** die Abflachung (34, 40) zumindest teilweise an die Form der Stirnseite (41) des Verschlußteiles (24, 38) angepaßt ist.

7. Ringglied, insbesondere nach einem der Ansprüche 1 bis 6,
**dadurch gekennzeichnet, daß** das Verschlußteil (38) quer zur Längsrichtung der Ringkörperenden (36, 37) teilweise offen ist.

8. Ringglied nach Anspruch 7,
**dadurch gekennzeichnet, daß** das Verschlußteil (38) eine zu seiner einen Seitenfläche (42, 43) offene Vertiefung (48) aufweist.

9. Ringglied nach Anspruch 8,
**dadurch gekennzeichnet, daß** sich die Vertiefung (48) bis etwa in Höhe des halben Durchmessers von Durchtrittsöffnungen (45, 46) für die Ringkörperenden (36, 37) erstreckt.

10. Ringglied nach Anspruch 8 oder 9,
**dadurch gekennzeichnet, daß** die Vertiefung (48) in Höhe der Durchtrittsöffnungen (45, 46) von einer Seitenwand (49) begrenzt ist, die sich bis zur Stirnseite (41) des Verschlußteiles (38) erstreckt.

11. Ringglied nach Anspruch 10,
**dadurch gekennzeichnet, daß** die Stirnseite (41) des Verschlußteiles (38) an die Form der Abflachung (40) des Ringkörpers (35) zumindest teilweise angepaßt ist.

12. Ringglied, insbesondere nach einem der Ansprüche 1 bis 11,
**dadurch gekennzeichnet, daß** die Ringkörperenden (36, 37) innerhalb des Verschlußteiles (38) nur über einen Teil ihres Umfanges über eine Schweißnaht (50, 51) mit dem Verschlußteil (38) verbunden sind.

13. Ringglied nach Anspruch 12,
**dadurch gekennzeichnet, daß** die Schweißnaht (50, 51) in der Vertiefung (48) des Verschlußteiles (38) liegt.

14. Reifenkette, insbesondere Reifenschutzkette, aus Ringgliedern, insbesondere nach einem der Ansprüche 1 bis 13, und in diese eingreifenden Steggliedern,
**dadurch gekennzeichnet, daß** die Ringglieder (2, 3) so angeordnet sind, daß ihre Abflachungen (34, 40) sich zumindest annähernd in Kettenlängsrichtung (52) erstrecken.

15. Reifenkette nach Anspruch 14,
**dadurch gekennzeichnet, daß** die Stegglieder (1) im Bereich außerhalb der Abflachungen (34, 40) in die Ringglieder (2, 3) eingreifen.

16. Reifenkette nach Anspruch 14 oder 15,
**dadurch gekennzeichnet, daß** die Stegglieder (1) Einhängeöffnungen (7, 8) aufweisen, die durch einen Steg (20) voneinander getrennt sind.

17. Reifenkette nach Anspruch 16,
**dadurch gekennzeichnet, daß** der Steg (20) und das Verschlußteil (24, 38) in ihrer Außenform so aufeinander abgestimmt sind, daß in einer Endlage der Steg (20) und das Verschlußteil (24, 38) etwa flächig aneinander liegen.

18. Reifenkette nach Anspruch 16 oder 17,
**dadurch gekennzeichnet, daß** der Steg (20) nach innen gekrümmte Seitenflächen (22, 23) und das Verschlußteil (24, 38) nach außen gekrümmte Seitenflächen (53, 54) aufweisen.

19. Reifenkette nach Anspruch 17 oder 18,
**dadurch gekennzeichnet, daß** das Verschlußteil (24, 38) des Ringgliedes (2, 3) in der Endlage zwischen zwei Steggliedern (1) zentriert ist.

20. Verfahren zur Herstellung einer Reifenkette nach einem der Ansprüche 14 bis 19, bei dem durch die Einführöffnung des Ringgliedes Stegglieder eingehängt und anschließend auf den Ringkörperenden des Ringgliedes das Verschlußteil befestigt wird,
**dadurch gekennzeichnet, daß** an das Verschlußteil (24) quer zu dessen die Vertiefung (48) aufweisender Seite (43) ein Schweißgerät angesetzt wird, das bei liegendem Ringglied (3) die Ringkörperenden (36, 37) in der Vertiefung (48) mit dem Verschlußteil (24) verschweißt.

21. Verfahren, insbesondere nach Anspruch 20,
**dadurch gekennzeichnet, daß** die Ringkörperenden (36, 37) über eine nur über einen Teil ihres Umfanges sich erstreckende Schweißnaht (50, 51) mit dem Verschlußteil (24) verbunden werden.
